# EUROPEAN PATENT SPECIFICATION

(11) **EP 2 706 015 B1**
(45) Date of publication and mention of the grant of the patent: **03.02.2016**
(21) Application number: 13182789.1
(22) Date of filing: 03.09.2013
(51) Int. Cl.: B65D 5/02, B65D 5/10, B65D 5/42

(54) **Wiper blade package**
Wischerblattverpackung
Emballage pour balai d'essuie-glace

(30) Priority: 11.09.2012 KR 20120100275; 20.08.2013 KR 20130098267
(43) Date of publication of application: 12.03.2014
(73) Proprietor: The Korea Development Bank, Yeongdeungpo-gu Seoul 150-973 (KR)
(72) Inventor: Kim, In Ku, 426-767 Gyeonggi-do (KR); Nam, Kyung Jong, 345-803 Chungcheongnam-do (KR)
(74) Representative: Hörschler, Wolfram Johannes

(56) References cited:
- EP-A1- 1 041 007
- WO-A2-2008/036964
- US-A- 4 388 993
- US-B1- 6 206 279

## Description

### TECHNICAL FIELD

The present invention relates to a wiper blade package for receiving a wiper blade therein.

### BACKGROUND

A wiper blade for use in wiping a windshield of a motor vehicle has a wiper strip. The wiper strip is worn due to contact with the surface of a windshield. When the service life of a wiper strip comes to an end, the wiper blade is replaced with a new one. New wiper blades may be purchased at car accessory shops. Typically, wiper blades are displayed in the car accessory shops as contained in packages.

The package for receiving a wiper blade must be designed so as to appropriately receive a long wiper blade. Further, the package must be designed such that the wiper strip of a wiper blade and parts for securing the wiper strip is protected during handling or transportation. International Patent Application Publication No. WO 2008/036964 discloses a package for receiving a flat wiper blade.

When a consumer purchases a wiper blade, the consumer takes a wiper blade out of the package and then inspects the wiper blade and its wiper strip. Then, after inspection, the consumer puts the wiper blade into the package again. If the mouth portion of the package cannot be easily opened or closed, it could be troublesome or inconvenient for the consumer when the wiper blade is taken out and put back into the package. Further, the package must be structurally rigid in order to protect the wiper blade received therein and the parts of the wiper blade. When the package falls to the ground, the wiper blade received therein can come out of the package, and when many packages are piled together within a box, the package can become compressed. This may cause damage of the wiper blade received in the package. Another package is known from US 4 388 993.

However, conventional wiper blade packages have limits regarding easy opening of the mouth portion of the package through simple manipulation. Further, conventional wiper blade packages are unsatisfactory in terms of structural rigidity.

### SUMMARY

The present invention is directed to solving the aforementioned problems. The present invention provides a wiper blade package wherein a mouth portion can be opened with simple manipulation. Further, the present invention provides a wiper blade package wherein a mouth portion and a bottom portion are constructed with a strong structure. Further, the present invention provides a wiper blade package that can be closely piled within a box.

According to various aspects, there are provided numerous embodiments of a wiper blade package wherein a mouth portion is openable by being pressed in a lateral direction.

According to the invention a wiper blade package includes a receiving portion having a receiving cavity that is surrounded by a first panel, a second panel, a first side panel and a second side panel. The first panel is bendable around a first bend line that extends in a longitudinal direction between both lateral edges. The first panel has a lid flap at a longitudinal end. The lid flap is foldable around the first bend line and is pivotable around a first hinge line which intersects the first bend line at an acute angle in an inward direction. The second panel is opposed to the first panel and has a first engagement flap folded toward the first panel at a longitudinal end. The first side panel extends along opposing edges of the first panel and the second panel. The second side panel extends along edges opposed to the opposing edges of the first panel and the second panel. The lid flap engages a free end of the first engagement flap at its free end and thereby closes the receiving portion. Further, by pressing the first and second side panels toward the receiving portion, the lid flap is pivoted from the first engagement flap and thereby opens the receiving portion.

According to the present invention, the lid flap has, at its free end, at least one engagement tab which engages the free end of the first engagement flap. In a closed position where the lid flap closes the receiving portion, the engagement tab intervenes between the first engagement flap and the second panel. In such an embodiment, the first engagement flap has an engagement notch, to which a fixed end of the engagement tab is fitted, at its free end. Further, the free end of the lid flap may be situated more outwardly than the free end of the first engagement flap in the closed position where the lid flap closes the receiving portion. Further, the lid flap has a pair of halves divided by the first bend line. The pair of the halves are folded around the first bend line in the closed position where the lid flap closes the receiving portion.

In an embodiment of the present invention, the first panel has a bottom flap at a longitudinally opposite end. The bottom flap is foldable around the first bend line and is pivotable around a second hinge line intersecting the first bend line at an acute angle in an inward direction. The second panel has a second engagement flap folded toward the first panel at a longitudinally opposite end. The bottom flap has at least one engagement tab, which is inserted in between the second engagement flap and the second panel, at a free end thereof. In such an embodiment, the second engagement flap may have an engagement notch, to which a fixed end of the engagement tab of the bottom flap is fitted, at the free end thereof. Further, when the bottom flap is in engagement with the second engagement flap, the free end of the bottom flap may be situated more outwardly than the free end of the second engagement flap. Further, the bottom flap has a pair of halves divided by the first bend line. When the bottom flap is in engagement with the second engagement flap, the pair of the halves of the bottom flap are folded around the first bend line.

In an embodiment of the present invention, the second panel is bendable around a second bend line extending in a longitudinal direction between both lateral edges.

In an embodiment of the present invention, the lid flap has a shape of a pentagon or hexagon.

In an embodiment of the present invention, the wiper blade package further includes hanging holes perforated through the second panel and the first engagement flap.

### BRIEF DESCRIPTION OF THE DRAWINGS

Arrangements and embodiments may be described in detail with reference to the following drawings in which like reference numerals refer to like elements or components, wherein:
FIG. 1 shows a development diagram of a package sheet that is assembled into a wiper blade package according to an embodiment;
FIG. 2 shows an enlarged diagram of the right side of the development diagram shown in FIG. 1;
FIG. 3 shows an enlarged diagram of the left side of the development diagram shown in FIG. 1;
FIG. 4 is a top view of a wiper blade package according to an embodiment and shows an example of a wiper blade to be received in the package in dashed lines;
FIG. 5 is a top view of a wiper blade package according to an embodiment and shows another example of a wiper blade to be received in the package in dashed lines;
FIG. 6 is a side view of a wiper blade package according to an embodiment;
FIG. 7 shows a cross-section of a wiper blade package according to an embodiment;
FIG. 8 is a perspective view showing a mouth portion of the wiper blade package shown in FIGS. 4 and 5;
FIG. 9 is a sectional view taken along the line IX-IX of FIG. 8;
FIG. 10 illustrates opening of a mouth portion of a wiper blade package;
FIG. 11 is a perspective view showing a bottom portion of the wiper blade package shown in FIGS. 4 and 5;
FIG. 12 is a schematic diagram illustrating an embodiment where wiper blade packages are piled together;
FIG. 13 is a perspective view showing the mouth portion of a wiper blade package according to an embodiment, wherein the mouth portion is not yet assembled;
FIG. 14 is a perspective view showing the mouth portion of a wiper blade package according to an embodiment, wherein the mouth portion is partially assembled;
FIG. 15 is a perspective view showing the mouth portion of a wiper blade package according to an embodiment, wherein the mouth portion is assembled; and
FIG. 16 shows a wiper blade package according to another embodiment.

### DETAILED DESCRIPTION

Detailed descriptions will be made as to embodiments of a wiper blade package with reference to the accompanying drawings.

The directional term "upper," "upward" or the like as used herein is based on a direction in which a lid flap is located relative to a second panel in a wiper blade package shown in the accompanying drawings, while the directional term "Iower," "downward" or the like refers to a direction opposite to the upper or upward direction. Further, as used herein, the directional term "front," "frontward" or the like is based on a direction in which a hanging hole is located relative to a bottom flap in the wiper blade package shown in the accompanying drawings, while the directional term "rear," "rearward" or the like refers to a direction opposite to the front or frontward direction. The wiper blade package shown in the accompanying drawings may be otherwise oriented and the aforementioned directional terms may be interpreted accordingly. Further, as used herein, the directional term "inward", "inner" or the like means a direction directed toward a center of the wiper blade package, while the directional term "outward," "outer" or the like means a direction opposite to the inward or inner direction.

The term "fold line" as used herein means a line that is located between two parts adjacent to one another via such a line when one part of said two parts is foldable toward the other part or said two parts are foldable toward each other. Further, as used herein, the term "hinge line" means a line that is located between two parts adjacent to one another via such a line when one part of said two parts is pivotable relative to the other part of said two parts. Further, as used herein, the term "bent," "bending" or the like means that two sections divided by a line in a panel or flap of the wiper blade package are elastically movable toward or away from each other and the line located between said two sections are referred to as "a bend line." Further, said fold line may be understood as including said hinge line and said bend line.

The wiper blade package (hereinafter, simply referred to as "package") according to embodiments is configured to receive a wiper blade therein. Exemplary articles to be received by the package are not limited to a wiper blade and may include other elongated articles.

The package according to embodiments has a receiving portion that extends in a longitudinal direction of the package and receives the wiper blade. The receiving portion has a receiving cavity which is surrounded by a plurality of panels forming a body of the package. In the plurality of panels, two adjacent panels may be moved toward or away from each other around their common edge. In one embodiment, said plurality of panels comprise: a first panel located upwardly in the package; a second panel located downwardly in the package opposite the first panel; and two side panels extending along opposing lateral edges of the first and second panels, respectively. The first and second panels have a bend line that extends in a longitudinal direction between the lateral edges. In this embodiment, the cross-sectional shape of the receiving portion becomes a hexagon. In another embodiment, the second panel consists of a unitary panel without the bend line. In this embodiment, the cross-sectional shape of the receiving portion becomes a pentagon.

In the package according to embodiments, a pentagonal or hexagonal lid flap, which is pivotable to open or close the receiving portion, is disposed at a mouth portion of the receiving portion. In one embodiment, the lid flap comprises two halves that are foldable around the bend line. The lid flap is integrally formed to a longitudinal end of the first panel via a hinge line. The lid flap is pivotable between a closed position where the receiving portion is closed and an open position where the receiving portion is opened.

In the package according to embodiments, the hinge line of the lid flap intersects the bend line at an acute angle in an inward direction. If a force or pressure is applied to the first panel in a lateral direction, then the lid flap is pivoted toward the inside of the receiving portion due to the angle of the hinge line relative to the bend line. Further, since the lid flap is foldable around the bend line of the first panel, the lid flap is pivoted toward the inside of the receiving portion while the two halves divided by the bend line are folded convexly toward the inside of the receiving portion. Through the aforementioned folding action and pivoting action, the lid flap opens the receiving portion. If the force or pressure is removed, the lid flap reverts to the closed position due to the restoration force of the first panel.

The package according to embodiments has a first engagement flap for maintaining the lid flap in the closed position. In one embodiment, the first engagement flap is integrally formed to a longitudinal end of the second panel and is folded toward the first panel, i.e., toward the inside of the receiving portion. Further, the lid flap is maintained in the closed position as engaged with a free end of the first engagement flap at its free end. In one embodiment, the lid flap has, at its free end, an engagement tab intervening between the second panel and the first engagement flap in the closed position. Further, to ensure the fixation of the lid flap in the closed position, an engagement notch is provided at the free end of the first engagement flap and a fixed end of the engagement tab of the lid flap is fitted to the engagement notch in the closed position. Further, in the closed position, the free end of the first engagement flap is more inward than the free end of the lid flap. Thus, although a force pushing or pivoting the lid flap out of the closed position is applied to the lid flap, a portion of the first engagement flap, which is more inward than the free end of the lid flap, allows the lid flap to be maintained in the closed position.

In the package according to embodiments, the bottom portion of the receiving portion is constructed using the aforementioned engagement configuration between the lid flap and the first engagement flap. In one embodiment, the first panel has a bottom flap at its longitudinally opposite end and the second panel has a second engagement flap at its longitudinally opposite end. The bottom flap has the same configuration as the lid flap and the second engagement flap has the same configuration as the first engagement flap. The bottom flap engages a free end of the section engagement flap at its free end, thereby forming the bottom portion. The bottom flap is pivotable between an open position where the bottom portion is opened and a closed position where the bottom portion is closed. The free end of the second engagement flap is more inward than the free end of the bottom flap. Thus, although a force perpendicular to the bottom flap is applied to the bottom flap engaged with the section engagement flap, the bottom flap cannot be pivoted outward due to the engagement with the second engagement flap.

The package according to embodiments is capable of resisting a perpendicular load at the mouth portion and the bottom portion of the receiving portion. In the lid flap situated in the closed position and the bottom flap forming the bottom portion, the two halves divided by the bend line of the first panel are folded around the bend line and the bend line between the two halves are situated perpendicularly to the first panel or the second panel. Accordingly, the bend line and the two folded halves in the lid flap or the bottom flap can resist the perpendicular load.

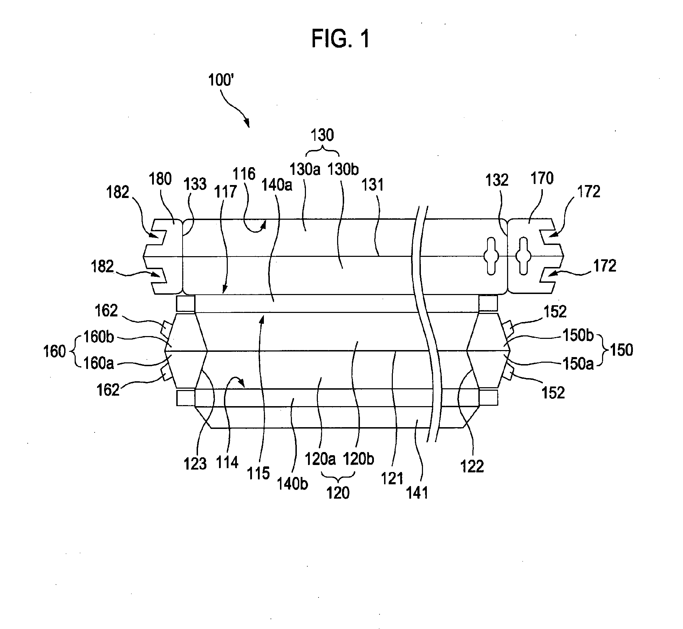

FIGS. 1 to 3 show a development diagram of a package sheet 100' that is assembled into the package according to embodiments. The package sheet 100' may be made of a flexible sheet material by cutting or punching it into the shape of the package sheet 100'. Said flexible sheet material may include, but is not limited to, a transparent, translucent or opaque plastic material or other flexible material. Diagrams or texts related to a wiper blade may be printed on a surface of the package sheet 100', or a label with the diagrams or texts printed thereon may be adhered to the surface of the package sheet 100'.

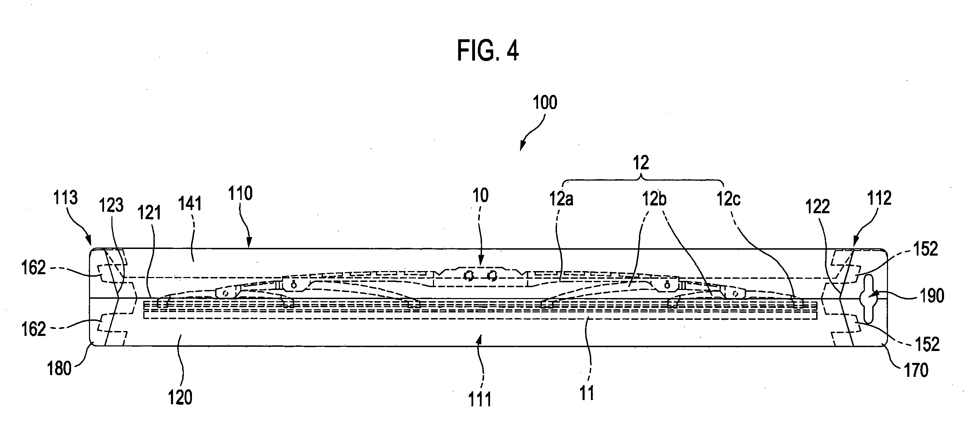

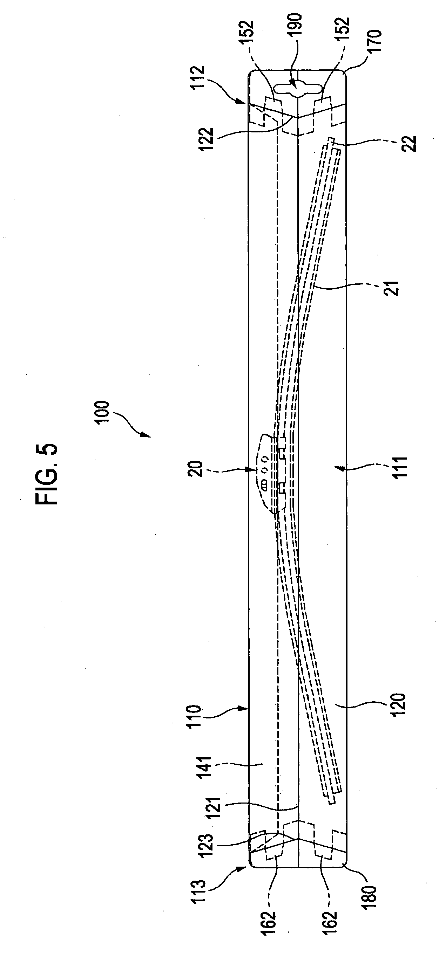

FIGS. 4 and 5 show the package 100 receiving a wiper blade. Referring to FIGS. 4 and 5, the package 100 according to an embodiment comprises a receiving portion 110. The receiving portion 110 extends in a longitudinal direction of the package 100 and has a receiving cavity 111, into which a wiper blade is put, therein. Further, the receiving portion 110 has a mouth portion 112, which is located at a longitudinal end or a front end, and a bottom portion 113, which is located at a longitudinally opposite end or a rear end. The wiper blade may be put into or taken out of the receiving portion 110 through the mouth portion 112. The bottom portion 113 may bear the wiper blade received in the receiving portion 110.

Said wiper blade to be received in the package 100 may include a yoke type wiper blade 10 shown by dashed lines in FIG. 4 or a flat wiper blade 20 shown by dashed lines in FIG. 5.

The yoke type wiper blade 10 includes an elongated wiper strip 11 made of a rubber or elastomer material and a frame assembly 12 supporting and holding the wiper strip 11. The frame assembly 12 comprises one main yoke 12a and a plurality of sub yokes joined to the main yoke 12a in a bifurcated shape. Clamps 12c provided at distal ends of the sub yokes 12b secure the wiper strip 11.

The flat wiper blade 20 includes an elongated wiper strip 21 made of a rubber or elastomer material and one elongated flat bar 22 supporting and holding the wiper strip 11. The flat bar 22 is curved with a certain curvature. The wiper strip 21 is secured to the flat bar 22 as fitted to a longitudinal slot formed in the flat bar 22.

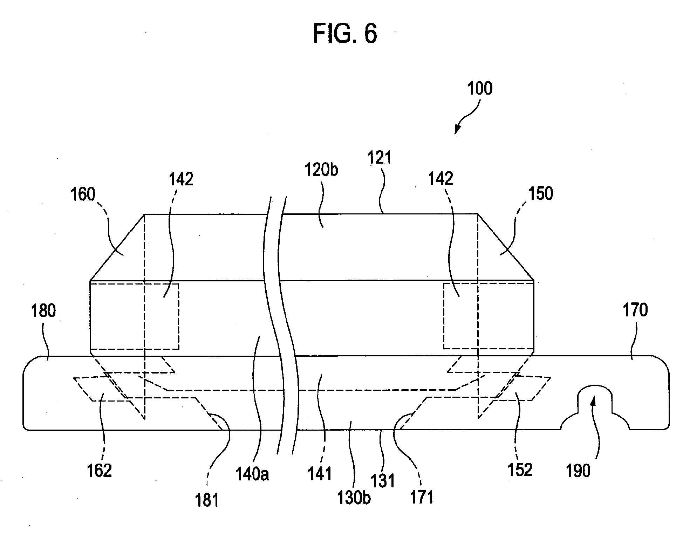

Referring to FIGS. 1 to 7, the package 100 has a plurality of panels that form a body of the package 100. In this embodiment, said plurality of panels comprise: a first panel 120 located upwardly in the package 100; a second panel 130 located downwardly in the package 100 opposite the first panel 120; and a first side panel 140a and a second side panel 140b located at lateral sides of the package 100 respectively. The receiving cavity 111 of the receiving portion 110 is surrounded by the first panel 120, the second panel 130, the first side panel 140a and the second side panel 140b. Since the package 100 is made of a flexible material, adjacent two panels may bend or flex around their common edge 114, 115, 116, 117.

The first panel 120 has a first bend line 121 that extends in a longitudinal direction between both edges 114, 115 located in a lateral direction. The first panel 120 is divided into two sections 120a, 120b relative to the first bend line 121. The first panel 120 may bend around the first bend line 121 due to a force acting in the lateral direction. That is, the two sections 120a, 120b of the first panel 120 may be elastically moved toward or away from each other with respect to the first bend line 121. The second panel 130 has a second bend line 131 that extends in a longitudinal direction between both edges 116, 117 located in a lateral direction. The second panel 130 is divided into two sections 130a, 130b relative to the second bend line 131. The second panel 130 may bend around the second bend line 131 due to a force acting in the lateral direction. That is, the two sections 130a, 130b of the second panel 130 may be elastically moved toward or away from each other with respect to the second bend line 131.

The first side panel 140a is located between the first panel 120 and the second panel 130. Thus, the first side panel 140a extends along the opposing edges 115, 117 of the first panel 120 and the second panel 130. As shown in FIGS. 1 to 3, a fold line 143 is formed between the first side panel 140a and the first panel 120, and a fold line 144 is formed between the first side panel 140a and the second panel 130. The second side panel 140b extends parallel to the first panel 120 along the edge 114 of the first panel 120. A fold line 145 is formed between the second side panel 140b and the first panel 120. A bonding flap 141 is integrally formed to the opposite edge of the second side panel 140b in a longitudinal direction. As shown in FIGS. 1 to 3, a fold line 146 is formed between the second side panel 140b and the bonding flap 141. The bonding flap 141 may be inwardly folded. An outer surface of the bonding flap 141 and an inner surface of the second panel 130 are bonded together by a bonding means, thus forming the body of the package 100 and defining the receiving cavity 111. Said bonding means may include a double-sided adhesive tape, a bonding agent, thermal fusion bonding, ultrasonic bonding, etc. When the outer surface of the bonding flap 141 and the inner surface of the second panel 130 are bonded together, the fold line 146 of the bonding flap 141 is aligned to the edge 116 of the second panel 130. Therefore, in the assembled package 100, the second side panel 140b extends along the edges 114, 116 that are opposed to the opposing edges 115, 117 of the first and second panels 120, 130.

The first side panel 140a and the second side panel 140b have an extension flap 142 at either longitudinal end. The extension flap 142 is integrally formed to the first side panel 140a or the second side panel 140b via a fold line 147 and may be folded toward the inside of the receiving portion 110. In the assembled package 100, the extension flap 142 is situated more inward than a lid flap and a bottom flap, which are described below.

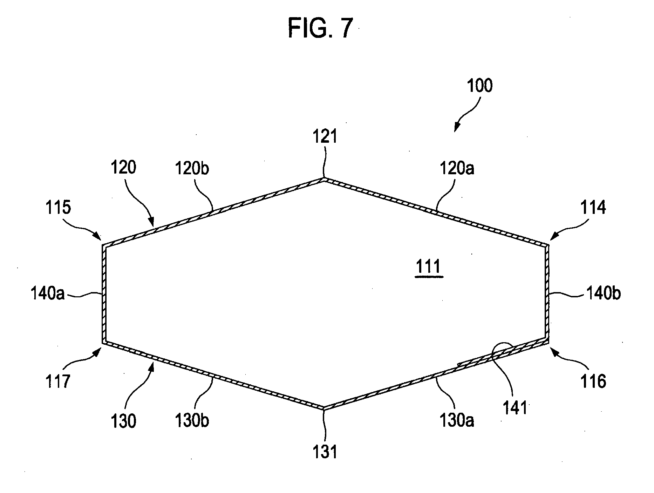

When assembling the package sheet 100' into the package 100, the first panel 120 is folded such that the first bend line 121 protrudes upward, while the second panel 130 is folded such that the second bend line 131 protrudes downward. As shown in FIG. 7, the receiving portion 110, which has the receiving cavity 111 defined by the two sections 120a, 120b of the first panel 120, the two sections 130a, 130b of the second panel 130, the first side panel 140a and the second side panel 140b, has a hexagonal cross-section. In the cross-sectional shape of the receiving portion 110, the first bend line 121 is located at a top vertex of the hexagon, while the second bend line 131 is located at a bottom vertex of the hexagon.

The package 100 includes a lid flap 150 that is disposed at the mouth portion 112 of the receiving portion 110 and forms the mouth portion 112. In this embodiment, the hexagonal lid flap 150 is integrally formed to the longitudinal end or front end of the first panel 120 via a first hinge line 122. Thus, the lid flap 150 may be pivoted toward the inside or outside of the first panel 120 around the first hinge line 122, i.e., between an open position where the receiving portion 110 is opened and a closed position where the receiving portion 110 is closed. Further, the first bend line 121 extends up to a free end 151 of the lid flap 150 across the first hinge line 122. Thus, the lid flap 150 has two halves 150a, 150b that are divided by the first bend line 121. The two halves 150a, 150b may be moved toward or away from each other with respect to the first bend line 121. That is, the lid flap 150 may be folded around the first bend line 121.

The first hinge line 122 intersects the first bend line 121 between the edges 114, 115 of the first panel 120 (or between the common edges of the first panel 120 and the first and second side panels 140a, 140b). Further, the first hinge line 122 intersects the first bend line 121 at an acute angle in an inward direction of the first panel 120. That is, the first hinge line 122 is convex toward the inside of the first panel 120 in a V-shape. Since the first hinge line 122 extends at an acute angle in the inward direction, when a lateral force is applied to the first panel 120 and the first panel 120 is bent as protruding upward, the lid flap 150 can be pivoted toward the inside of the first panel 120, i.e., toward the inside of the receiving portion 110. Further, since the lid flap 150 is foldable around the first bend line 121, the lid flap 150 can be pivoted toward the inside of the receiving portion 110 while its two sections 150a, 150b approach each other. Through the aforementioned pivoting and folding actions, the lid flap 150 opens the mouth portion 112 of the receiving portion 112. In the illustrated embodiment, the first hinge line 122 extends in the shape of a straight line. Alternatively, the first hinge line 122 may extend in the shape of a curved line.

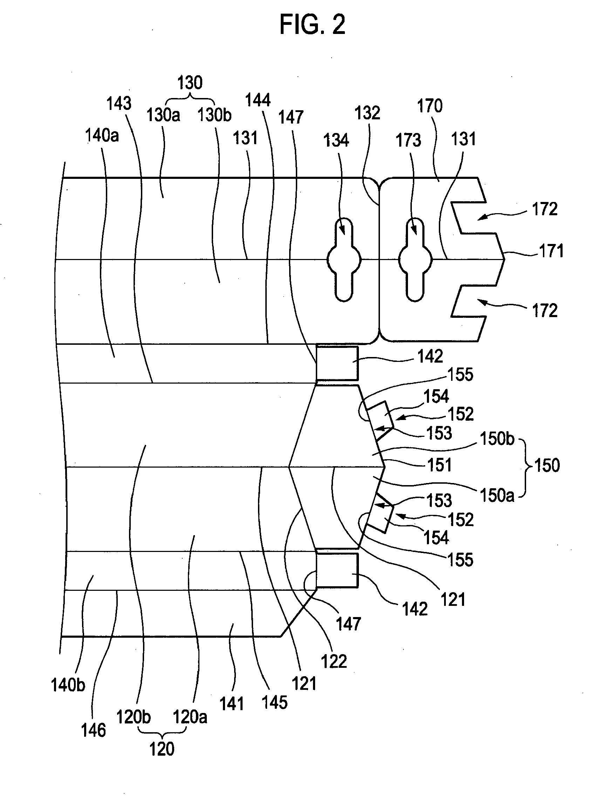

The package 100 includes a first engagement flap 170 for maintaining the lid flap 150 to the position where the receiving portion 110 is closed. The first engagement flap 170 is integrally formed to the longitudinal end or front end of the second panel 130 via a fold line 132. The fold line 132 of the first engagement panel 170 is located more outwardly than the first hinge line 122 of the lid flap 150. The first engagement flap 170 is folded toward the first panel 120, i.e., toward the inside of the receiving portion 110. The second bend line 131 of the second panel 130 extends up to a free end 171 of the first engagement flap 170 across the fold line 132. Thus, the first engagement flap 170 is foldable around the second bend line 131. As shown in FIGS. 1 and 2, the free end 171 of the first engagement flap 170 is formed in a V shape that is convex toward the outside of the package 100. The free end 171 of the first engagement flap 170 has a shape corresponding to the shape of the free end 151 of the lid flap 150.

A hanging portion 190 for use in hanging the package 100 on a display shelf or a wall surface for displaying the package 100 is provided in the package 100. In this embodiment, the hanging portion 190 includes a hanging hole 173, which is perforated in the first engagement flap 170, and a hanging hole 134, which is perforated in the second panel 130. When the first engagement flap 170 is folded onto the second panel 130, the hanging hole 173 and the hanging hole 134 are aligned with each other. The package 100 may be vertically hung by a peg, which is provided on a display shelf or a wall surface and passes through the hanging holes 134, 173. The hanging holes 134, 173 may have various shapes such as a circle, oval, rectangle, diamond, etc.

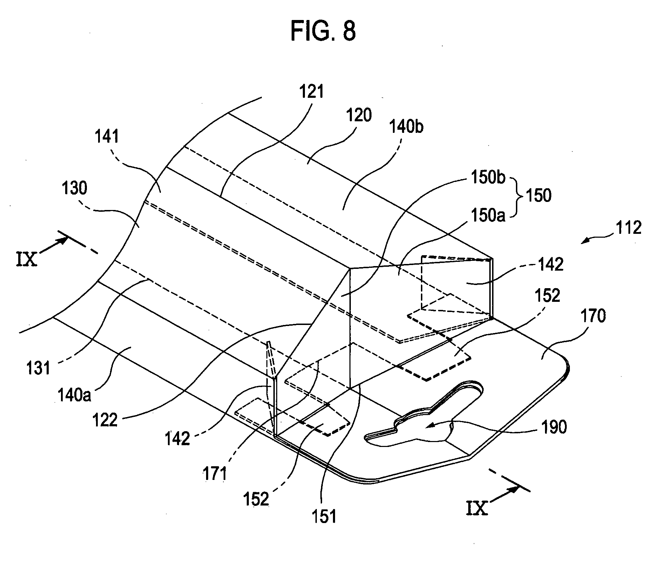

The lid flap 150 engages the free end 171 of the first engagement flap 170 at its free end 151, thereby closing the mouth portion 112 of the receiving portion 110. FIGS. 8 to 10 show the mouth portion 112 of the receiving portion 110 in detail. The engagement between the lid flap 150 and the first engagement flap 170 will be described with reference to FIGS. 1 to 10.

In the closed position of the receiving portion 110, the free end 151 of the lid flap 150 engages the free end 171 of the first engagement flap 170, allowing the lid flap 150 to be maintained in the closed position. In this embodiment, the lid flap 150 has a pair of engagement tabs 152, which engage the free end 171 of the first engagement flap 170, at the free end 151. The engagement tab 152 extends from the free end 151 of the lid flap 150 and is integrally formed to the free end 151 of the lid flap 150 via a fold line 155. In the illustrated embodiment, the engagement tab 152 has a rectangular shape. Alternatively, the engagement tab 152 may have a semi-circular, semi-oval or polygonal shape.

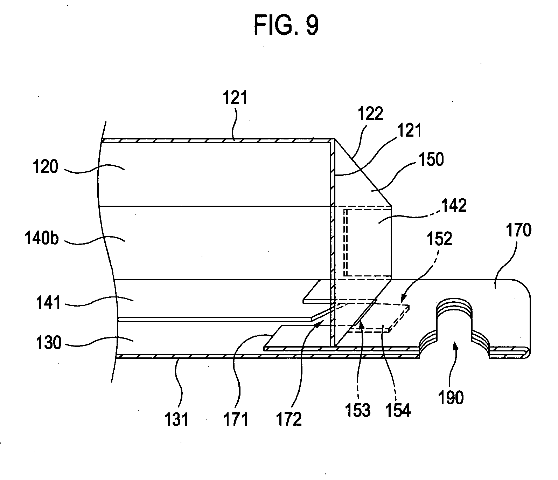

In the closed position of the receiving portion 110, the engagement tab 152 of the lid flap 150 intervenes between the free end 171 of the first engagement flap 170 and the inner surface of the second panel 130, thereby engaging the free end 171. Specifically, a fixed end 153 of the engagement tab 152 engages the free end 171 of the first engagement flap 170 and a body 154 of the engagement tab 152 intervenes between the first engagement flap 170 and the second panel 130 (*see* FIG. 9).

Further, to fix the lid flap 150 in the closed position, a pair of engagement notches 172 are provided at the free end 171 of the first engagement flap 170. When the lid flap 150 is pivoted from the open position of the receiving portion 110 to the closed position, the fixed end 153 of the engagement tab 152 is fitted to the engagement notch 172 along the engagement notch 172. In the closed position of the receiving portion 110, the fixed end 153 of the engagement tab 152 is fitted to the engagement notch 172 and the body 154 of the engagement tab 152 intervenes between the second panel 130 and the first engagement flap 170. Further, the free end 151 of the lid flap 150 is situated more outwardly than the free end 171 of the first engagement flap 170. When the lid flap 150 is in the closed position, one end of the wiper blade 10, 20, which is received in the receiving portion 110, may contact the lid flap 150 and then apply a force to the lid flap 150 in a direction perpendicular to the lid flap 150. Then, the lid flap 150 may be pivoted toward the outside of the package 100 while pushing the first engagement flap 170 outward. However, a portion of the first engagement flap 170, which is between the free end 151 of the lid flap 150 and the free end 171 of the first engagement flap 170, is situated more inwardly than the free end 151 of the lid flap 150. Thus, the lid flap 150 cannot be pivoted outwardly and is maintained in the closed position.

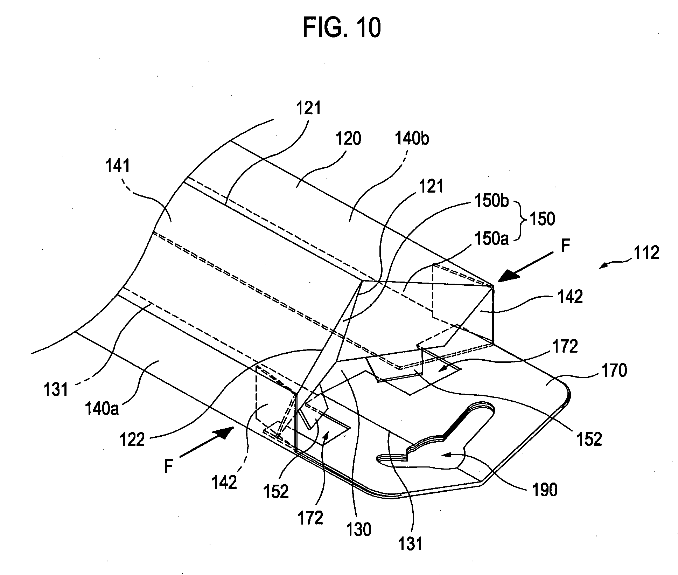

FIG. 10 illustrates the opening operation of the lid flap 150. When the receiving portion 110 is opened in order to take the wiper blade 10, 20 out of the package 100, the lid flap 150 is pivoted from the first engagement flap 170 to the open position. The first panel 120 is bent in an upwardly convex manner, thereby causing the pivoting movement of the lid flap 120. The force applied to the first panel in the lateral direction causes the first panel 120 to be bent in an upwardly convex manner. If the first panel 120 is bent, then the lid flap 150 opens the receiving portion 110 while being folded around the first bend line 121 and being pivoted with respect to the first hinge line 122. The aforementioned lateral force is produced by pressing the first and second side panels 140a, 140b in the vicinity of the mouth portion 112 of the receiving portion 110 toward the receiving portion 110.

As shown by arrows F in FIG. 10, the first and second side panels 140a, 140b are pressed toward the inside of the package 100 (i.e., toward the receiving portion 110) in the vicinity of the mouth portion 112. Then, the first panel 120 is bent in an upwardly convex manner around the first bend line 121. In this case, the second panel 130 may also be bent in a downwardly convex manner around the second bend line 131. In addition to the first panel 120 being bent, the lid flap 150 is pivoted from the closed position of the receiving portion 110 to the open position, i.e., from the first engagement flap 170 toward the inside of the receiving portion 110, thereby opening the mouth portion 112 of the receiving portion 110.

To pivot the lid flap 150 from the open position of the receiving portion 110 from the closed position, the first and second side panels 140a, 140b are released from the pressure applied thereto. Then, the package 100, which has constricted in the lateral direction, reverts to its original condition. At that point, the first panel 120 is bent in a direction reverse to that at which the first and second side panels are pressed. In addition to the first panel 120 being bent in the reverse direction, the lid flap 150 is pivoted to the closed position of the receiving portion 110 while the engagement tab 152 is inserted in between the first engagement flap 170 and the second panel 130.

Referring to FIGS. 1 to 3, the package 100 includes a bottom flap 160, which is disposed in the bottom portion 113 of the receiving portion and forms the bottom portion 113. Further, the package 100 includes a second engagement flap 180 for fixing the bottom flap 160. In this embodiment, the bottom flap 160 has the same configuration as the lid flap 150 and the second engagement flap 180 has the same configuration as the first engagement flap 170.

The bottom flap 160 is integrally formed to the longitudinally opposite end or the rear end of the first panel 120 via a second hinge line 123. The first bend line 121 extends up to a free end 161 of the bottom flap 160 across the second hinge line 123. Thus, the bottom flap 160 is foldable around the first bend line 121 and is pivotable with respect to the second hinge line 123 toward the inside of the receiving portion 110. Similar to the lid flap 150, the bottom flap 160 has a hexagonal shape.

The second hinge line 123 intersects the first bend line 121 between the edges 114, 115 of the first panel 120 (or between the common edges of the first panel 120 and the first and second side panels 140a, 140b). Further, the second hinge line 123 intersects the first bend line 121 at an acute angle in an inward direction of the first panel 120. That is, the second hinge line 123 is convex toward the inside of the first panel 120 in a V-shape. Thus, when a force in the lateral direction is applied to the first panel 120 in the vicinity of the bottom portion 113 of the receiving portion 110 and the first panel 120 is bent thereby, the bottom flap 160 may be pivoted toward the inside of the receiving portion 110. In the illustrated embodiment, the second hinge line 123 extends in the shape of a straight line. Alternatively, the second hinge line 123 may extend in the shape of a curved line.

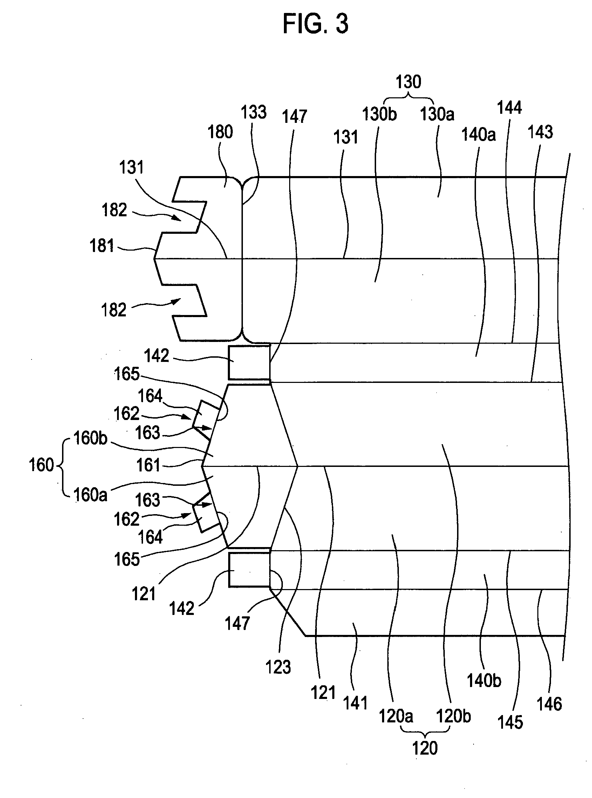

The second engagement flap 180 is integrally formed to the longitudinally opposite end or rear end of the second panel 130 via a fold line 133. The second engagement flap 180 is folded toward the first panel 120, i.e., toward the inside of the receiving portion 110. The second bend line 131 of the second panel 130 extends up to a free end 181 of the second engagement flap 180 across the fold line 133. As shown in FIGS. 1 and 3, the free end 181 of the second engagement flap 180 is formed in a V-shape that is convex toward the outside of the package 100. The free end 181 of the second engagement flap 180 has a shape corresponding to the shape of the free end 161 of the bottom flap 160.

The bottom flap 160 is fixed through engagement between its free end 161 and the free end 181 of the second engagement flap 180. The bottom flap 160 has, at its free end 161, a pair of engagement tabs 162 that engages the free end 181of the second engagement flap 180. The engagement tab 162 extends from the free end 161 of the bottom flap 160. The engagement tab 162 is folded in a direction opposite to the folded direction of the bottom flap 160 around a fold line 165 located at a fixed end 163 of the engagement tab 162.

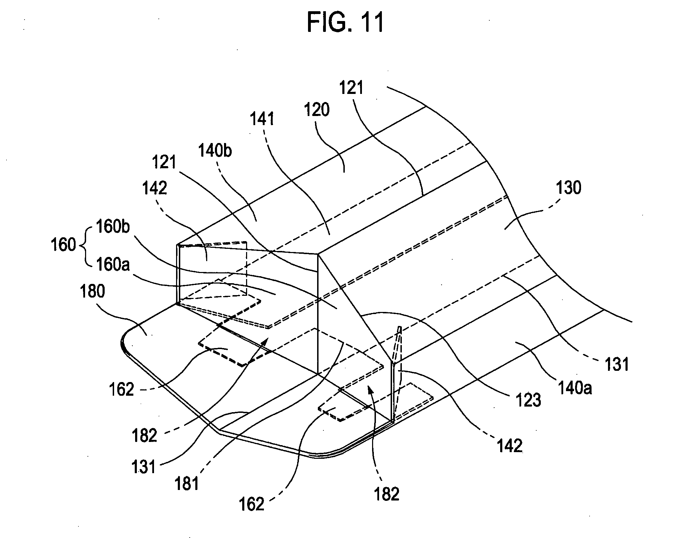

Further, to fix the bottom flap 160, a pair of engagement notches 182 are provided at the free end 181 of the second engagement flap 180. Referring to FIG. 11, when the bottom flap 160 is fixed, the fixed end 163 of the engagement tab 162 is fitted to the engagement notch 182 and a body 164 of the engagement tab 162 intervenes between the second engagement flap 180 and the second panel 130. Further, the free end 161 of the bottom flap 160 is situated more outwardly than the free end 181 of the second engagement flap 180. Therefore, even if a force is applied to the bottom flap 160 in a direction perpendicular to the bottom flap 160, the bottom flap 160 cannot be pivoted outwardly while pushing the second engagement flap 180 outward, thereby reliably preventing the wiper blade 10, 20 from falling out of the package 100 through the bottom portion 113.

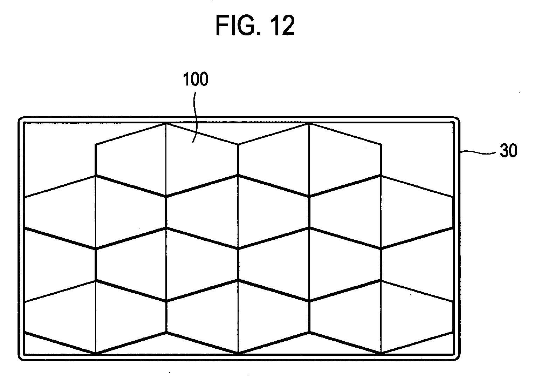

To pivot the lid flap 150 to the open position, the first panel 120 may be bent by applying a force to the first and second side panels 140a, 140b at the vicinity of the mouth portion 112. However, the bending of the first panel 120 does not extend down to the bottom portion 113. Further, the lid flap 150 is engaged with the first engagement flap 170 in the closed position of the receiving portion 110 and is therefore maintained in the closed position unless the lateral force is applied to the first panel 120. When the lid flap 150 is in the closed position or at the vicinity of the closed position, the halves 150a, 150b of the lid flap 150 are folded in an inwardly convex manner around the first bend line 121 and the first bend line 121 within the lid flap 150 is situated approximately perpendicular to the first panel 120 and the second panel 130. Thus, when a force is applied from the first panel 120 toward the second panel 130 or vice versa, i.e., when a load is applied to the package 100 in a perpendicular direction, the first bend line 121 and the halves 150a, 150b folded around the first bend line 121 resist the perpendicular load. This allows the mouth portion 112 of the receiving portion 110 to have high structural rigidity. Further, when the bottom flap 160 is engaged with the second engagement flap 180, the halves 160a, 160b of the bottom flap 160 are folded in an inwardly convex manner. Thus, the first bend line 121 within the bottom flap 160 and the halves 160a, 160b of the bottom flap 160 allow the bottom portion 113 of the receiving portion 110 to have high structural rigidity. Accordingly, the mouth portion 112 and the bottom portion 113 of the package 100 have a high structural rigidity. By way of example, as shown in FIG. 12, a large number of the packages 100 may be piled together in a box 30 for packaging or transportation. With the folded structure of the lid flap 150 in the mouth portion 112 and the folded structure of the bottom flap 160 in the bottom portion 113, an individual package 100 has a resistance against the perpendicular load. Thus, even if a large number of the packages 100 are piled together in the box 30, the package 100 is not deformed or crushed and the wiper blade 10, 20 therein is prevented from being damaged. Further, since the package 100 has a hexagonal cross-section, the packages can be closely retained in the box 30 without shaking during transportation.

The bend lines, the hinge lines and the fold lines described above may comprise indentations, scores, creases, perforations and the like formed in the package sheet 100'. By way of another example, the aforementioned lines may be formed by squeezing the package sheet 100' in its thickness direction, for example, by stamping or indenting the package sheet 100'. Further, the aforementioned lines may be formed when manufacturing the package sheet 100' from a raw sheet material, or after cutting or punching the package sheet 100' from a raw sheet material.

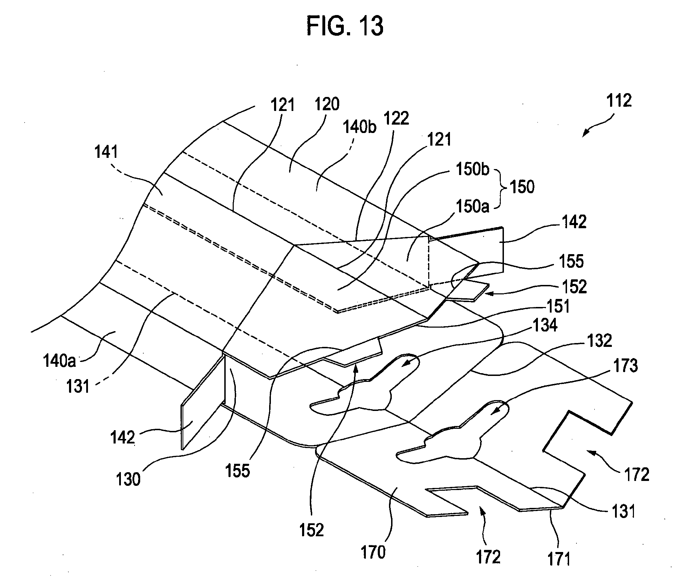

Examples of assembling the package 100 will be described with reference to FIGS. 13 to 15.

The package sheet 100' shown in FIG. 1 is folded and the receiving portion 110 of the package 100 is formed. For example, the second panel 130, the second side panel 140b, the first panel 120 and the first side panel 140a are folded around the common edges 114, 115, 116, 117, and the bonding flap 141 of the second side panel 140b and the lateral edge of the second panel 130 associated with the bonding flap 141 are bonded together by the aforementioned bonding means. Then, as shown in FIG. 13, the receiving portion 110 with the mouth portion 112 opened is formed. While the panels are folded as described above, the first panel 120 and the second panel 130 may be folded such that the first bend line 121 and the second bend line 131 protrude upwardly and downwardly, respectively. Alternatively, after the package 100 is provisionally assembled as shown in FIG. 13, by pressing the first and second side panels 140a, 140b toward the receiving portion 110, the first panel 120 and the second panel 130 may be folded such that the first bend line 121 and the second bend line 131 protrude upwardly and downwardly, respectively. If the bonding flap 141 is bonded and the first panel 120 and the second panel 130 are folded, the receiving portion 110 including the receiving cavity 111 having a hexagonal cross-section is formed.

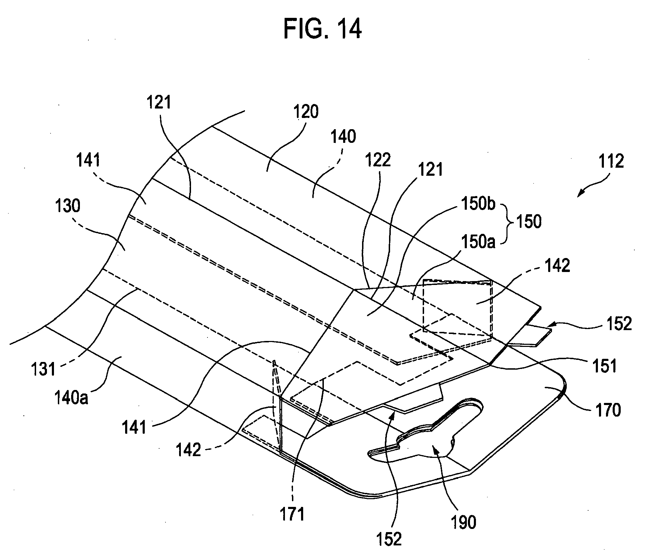

Next, as shown in FIG. 14, the first engagement flap 170 is folded toward the first panel 120, i.e., toward the inside of the receiving portion 110. Further, the extension flaps 142 of the first and second side panel 140a, 140b are folded toward the inside of the receiving portion 110.

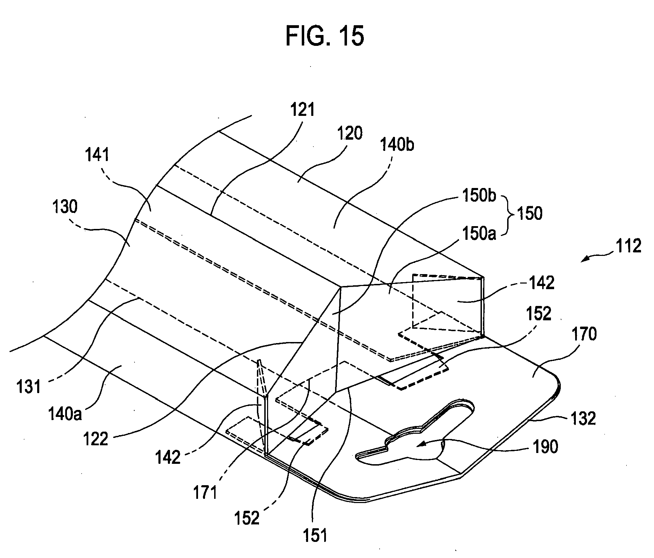

Next, as shown in FIG. 15, the lid flap 150 is pivoted toward the inside of the receiving portion 110 to close the mouth portion 112 of the receiving portion 110. Subsequently, the free end 151 of the lid flap 150 is brought into engagement with the free end 171 of the first engagement flap 170. If the first and second side panels 140a, 140b are pressed toward the receiving portion 110 at the vicinity of the mouth portion 112, then the first panel 120 and the second panel 130 are bent in upwardly convex and downwardly convex manners, respectively, and the lid flap 150 is further pivoted toward the inside of the receiving portion 110 accordingly. As the lid flap 150 is pivoted, the engagement tab 152 of the lid flap 150 faces toward the engagement notch 172 of the first engagement flap 170. If the first and second side panels 140a, 140b are released from the pressure, the lid flap 150 is pivoted toward the outside of the receiving portion 110 and the engagement tab 152 is fitted in between the first engagement flap 170 and the second panel 130. As a result, the lid flap 150 is maintained in the closed position of the receiving portion 110 and the mouth portion 112 is closed.

The assembly of the bottom portion 113 of the receiving portion 110 may be performed in a manner similar to the above-described exemplary assembly of the mouth portion 112. When opening the closed bottom portion 113, the first and second side panels 140a, 140b may be pressed toward the receiving portion 110 at the vicinity of the bottom portion 113. Then, the bottom flap 160 is pivoted from the second engagement flap 180 toward the inside of the receiving portion 110 and the engagement tab 162 of the bottom flap 160 is separated from the second engagement flap 180, thereby opening the bottom portion 113.

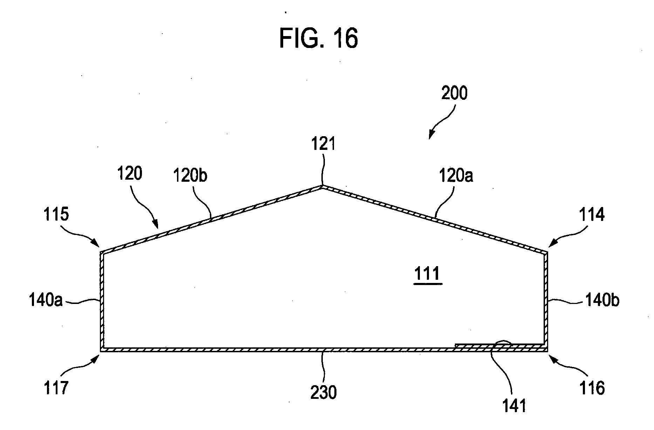

FIG. 16 shows a package according to another embodiment. According to the package 200 of this embodiment, a second panel 230 consists of a unitary panel and does not have a bend line extending in a longitudinal direction. Thus, dissimilar from the above-described second panel 130, the second panel 230 does not have two sections that are movable toward or away from each other around a bend line. Further, the receiving portion of the package 200 has an approximately pentagonal cross-section, and the lid flap and the bottom flap have a pentagonal shape accordingly.

In the foregoing embodiments, the unitary package sheet 100' is provided with all of the first panel 120, the second panel 130, 230 and the first and second side panels 140a, 140b. In other embodiments, each of the panels may be made individually and associated panels may be bonded together along their corresponding edges.

In the foregoing embodiments, the second panel 130, 230 has the hanging hole 134 and the first engagement flap 170 has the hanging hole 173. Another embodiment may include the second engagement flap 180 with the hanging hole and the second panel 130, 230 with the hanging hole corresponding to the hanging hole of the second engagement flap 180. The package in this example may be used in such a manner that the bottom flap 160 serves as the mouth portion of the receiving portion, since the bottom flap 160 is openable and closable like the lid flap 150.

In the foregoing embodiments, the engagement flaps for fixing the lid flap 150 and the bottom flap 160 are integrated with the longitudinal ends of the second panel 130, 230. In other embodiments, the engagement flaps may be made individually and attached to the longitudinal ends of the second panel 130, 230.

The package 100, 200 according to the embodiments disclosed herein has the mouth portion 112 that is openable through pressure in the lateral direction. Thus, the user or consumer can open the mouth portion 112 of the package by pressing the mouth portion 112 in the lateral direction. Further, the package 100, 200 according to the embodiments has the bottom portion 113 which is prevented from being pivoted through the engagement configuration. Thus, even if the package falls down or external impact is applied to the package, the wiper blade 10, 20 received in the package cannot fall out of the package. Further, the package 100, 200 according to the embodiments has the mouth portion 112 and the bottom portion 113 which resist a perpendicular load. Thus, even if the perpendicular load is applied to the package during the handling or transporting of the package, the package does not easily deform, thereby preventing damage to the wiper blade.

Although embodiments have been described with reference to a number of illustrative embodiments thereof, it should be understood that numerous other modifications and embodiments can be devised by those skilled in the art. More particularly, numerous variations and modifications are possible in the component parts and/or arrangements of the subject combination arrangement. In addition to variations and modifications in the component parts and/or arrangements, alternative uses will also be apparent to those skilled in the art.

## Claims

1. A wiper blade package (100, 200), comprising;
a first panel (120) bendable around a first bend line (121) extending in a longitudinal direction between both lateral edges (114, 115), the first panel having a lid flap (150) at a longitudinal end, the lid flap being foldable around the first bend line and pivotable around a first hinge line (122) intersecting the first bend line at an acute angle in an inward direction;
a second panel (130, 230) opposed to the first panel and having a first engagement flap (170) folded toward the first panel at a longitudinal end;
a first side panel (140a) extending along opposing edges (115, 117) of the first panel and the second panel;
a second side panel (140b) extending along edges (114, 116) opposed to the opposing edges of the first panel and the second panel; and
a receiving portion (110) having a receiving cavity (111) surrounded by the first panel, the second panel, the first side panel and the second side panel,
wherein the lid flap engages a free end (171) of the first engagement flap at a free end (151) thereof, closing the receiving portion,
wherein the lid flap can be pivoted from the first engagement flap by pressing the first and second side panels toward the receiving portion, opening the receiving portion,
**characterised in that** the lid flap has, at the free end thereof, at least one engagement tab (152) engaging the free end of the first engagement flap,
wherein the engagement tab intervenes between the first engagement flap and the second panel in a closed position where the lid flap closes the receiving portion, and
**in that** the first engagement flap has an engagement notch (172) at the free end thereof, and a fixed end (153) of the engagement tab is fitted to the engagement notch.

2. The wiper blade package of Claim 1, wherein the free end of the lid flap is situated more outwardly than the free end of the first engagement flap in the closed position where the lid flap closes the receiving portion.

3. The wiper blade package of Claim 1, wherein the lid flap has a pair of halves (150a, 150b) divided by the first bend line, and
wherein the pair of the halves are folded around the first bend line in the closed position where the lid flap closes the receiving portion.

4. The wiper blade package of Claim 1, wherein the first panel has a bottom flap (160) at a longitudinally opposite end, the bottom flap being foldable around the first bend line and pivotable around a second hinge line (123) intersecting the first bend line at an acute angle in an inward direction,
wherein the second panel has a second engagement flap (180) folded toward the first panel at a longitudinally opposite end, and
wherein the bottom flap has at least one engagement tab (162) at a free end (161) thereof, the engagement tab of the bottom flap being inserted in between the second engagement flap and the second panel.

5. The wiper blade package of Claim 4, wherein the second engagement flap has an engagement notch (182) at a free end (181) thereof, and a fixed end (163) of the engagement tab of the bottom flap is fitted to the engagement notch (182).

6. The wiper blade package of Claim 4, wherein when the bottom flap is engaged with the second engagement flap, the free end (161) of the bottom flap is situated more outwardly than the free end of the second engagement flap.

7. The wiper blade package of Claim 4, wherein the bottom flap has a pair of halves (160a, 160b) divided by the first bend line, and
wherein when the bottom flap is engaged with the second engagement flap, the pair of the halves of the bottom flap are folded around the first bend line.

8. The wiper blade package of Claim 1, wherein the second panel is bendable around a second bend line (131) extending in a longitudinal direction between both lateral edges (116, 117).

9. The wiper blade package of Claim 1, wherein the lid flap has a shape of a pentagon or hexagon.

10. The wiper blade package of Claim 1, further comprising hanging holes (134, 173) perforated through the second panel and the first engagement flap.

## Patentansprüche

1. Verpackung für Wischerblätter (100, 200), welche Folgendes umfasst:
eine erste Fläche (120), die um eine sich in Längsrichtung zwischen zwei Seitenkanten (114, 115) erstreckende erste Biegelinie (121) biegbar ist, wobei die erste Fläche an einem Längsende eine Deckelklappe (150) aufweist, wobei die Deckelklappe um die erste Biegelinie faltbar und um eine erste Gelenklinie (122) schwenkbar ist, die die erste Biegelinie in einem spitzen Winkel nach innen schneidet;
eine zur ersten Fläche entgegengesetzte zweite Fläche (130, 120), die eine erste Eingriffsklappe (170) aufweist, die an einem Längsende zur ersten Fläche hin gefaltet ist;
eine erste Seitenfläche (140a), die sich entlang entgegengesetzten Kanten (115, 117) der ersten Fläche und der zweiten Fläche erstreckt;
eine zweite Seitenfläche (140b), die sich entlang zu den entgegengesetzten Kanten der ersten Fläche und der zweiten Fläche entgegengesetzt angeordneten Kanten (114, 116) erstreckt; und
ein Aufnahmeteil (110) mit einem von der ersten Fläche, der zweiten Fläche, der ersten Seitenfläche und der zweiten Seitenfläche umgebenen Aufnahmeraum (111),
wobei die Deckelklappe an einem freien Ende (151) mit einem freien Ende (171) der ersten Eingriffsklappe in Eingriff kommt, wodurch das Aufnahmeteil geschlossen wird, und
wobei die Deckelklappe von der ersten Eingriffsklappe durch Drücken der ersten und der zweiten Seitenfläche zum Aufnahmeteil hin geschwenkt werden kann, wodurch das Aufnahmeteil geöffnet wird,
**dadurch gekennzeichnet, dass** die Deckelklappe an dem freien Ende mindestens eine Eingriffslasche (152) aufweist, die mit dem freien Ende der ersten Eingriffsklappe in Eingriff kommt,
wobei die Eingriffslasche in einer geschlossenen Position zwischen die erste Eingriffsklappe und die zweite Fläche eingreift, wobei die Deckelklappe das Aufnahmeteil schließt, und
dass die erste Eingriffsklappe an dem freien Ende eine Eingriffskerbe (172) aufweist, und ein festes Ende (153) der Eingriffslasche mit der Eingriffskerbe zusammenwirkt.

2. Verpackung für Wischerblätter nach Anspruch 1, wobei in der geschlossenen Position, wenn die Deckelklappe das Aufnahmeteil schließt, das freie Ende der Deckelklappe sich weiter nach außen als das freie Ende der ersten Eingriffsklappe befindet.

3. Verpackung für Wischerblätter nach Anspruch 1, wobei die Deckelklappe ein Paar von Hälften (150a, 150b) aufweist, die durch die erste Biegelinie geteilt sind, und
wobei in der geschlossenen Position, wenn die Deckelklappe das Aufnahmeteil schließt, das Paar von Hälften um die erste Biegelinie gefaltet ist.

4. Verpackung für Wischerblätter nach Anspruch 1, wobei die erste Fläche an einem entgegengesetzten Längsende eine Bodenklappe (160) aufweist, wobei die Bodenklappe um die erste Biegelinie faltbar und um eine zweite Gelenklinie (123) schwenkbar ist, die die erste Biegelinie in einem spitzen Winkel nach innen schneidet,
wobei die zweite Fläche eine zweite Eingriffsklappe (180) aufweist, die an einem entgegengesetzten Längsende zur ersten Fläche hin gefaltet ist, und
wobei die Bodenklappe an einem freien Ende (161) mindestens eine Eingriffslasche (162) aufweist, wobei die Eingriffslasche der Bodenklappe zwischen die zweite Eingriffsklappe und die zweite Fläche eingeschoben ist.

5. Verpackung für Wischerblätter nach Anspruch 4, wobei die zweite Eingriffsklappe an einem freien Ende (181) eine Eingriffskerbe (182) aufweist, und ein festes Ende (163) der Eingriffslasche der Bodenklappe mit der Eingriffskerbe (182) zusammenwirkt.

6. Verpackung für Wischerblätter nach Anspruch 4, wobei, wenn die Bodenklappe mit der zweiten Eingriffsklappe in Eingriff steht, das freie Ende (161) der Bodenklappe sich weiter nach außen als das freie Ende der zweiten Eingriffsklappe befindet.

7. Verpackung für Wischerblätter nach Anspruch 4, wobei die Bodenklappe ein Paar von Hälften (160a, 160b) aufweist, die durch die erste Biegelinie geteilt sind, und
wobei, wenn die Bodenklappe mit der zweiten Eingriffsklappe in Eingriff steht, das Paar von Hälften der Bodenklappe um die erste Biegelinie gefaltet ist.

8. Verpackung für Wischerblätter nach Anspruch 1, wobei die zweite Fläche um eine zweite Biegelinie (131) biegbar ist, die sich in Längsrichtung zwischen zwei Seitenkanten (116, 117) erstreckt.

9. Verpackung für Wischerblätter nach Anspruch 1, wobei die Deckelklappe eine Form eines Fünfecks oder Sechsecks aufweist.

10. Verpackung für wischerblätter nach Anspruch 1, welche ferner Aufhängelöcher (134, 173) umfasst, die durch die zweite Fläche und die erste Eingriffsklappe perforiert sind.

## Revendications

1. Emballage de balai d'essuie-glace (100, 200), comprenant:
un premier panneau (120) pliable autour d'une première ligne de pliage (121) qui s'étend dans une direction longitudinale entre les deux bords latéraux (114, 115), le premier panneau comprenant un rabat de recouvrement (150) à une extrémité longitudinale, le rabat de recouvrement étant pliable autour de la première ligne de pliage et pouvant pivoter autour d'un premier axe d'articulation (122) qui coupe la première ligne de pliage en formant un angle aigu dans une direction intérieure;
un deuxième panneau (130, 230) opposé au premier panneau et comprenant un premier rabat d'engagement (170) plié en direction du premier panneau à une extrémité longitudinale;
un premier panneau latéral (140a) qui s'étend le long de bords opposés (115, 117) du premier panneau et du deuxième panneau;
un deuxième panneau latéral (140b) qui s'étend le long de bords (114, 116) opposés aux bords opposés du premier panneau et du deuxième panneau; et
une partie de réception (110) comprenant une cavité de réception (111) entourée par le premier panneau, le deuxième panneau, le premier panneau latéral et le deuxième panneau latéral,
dans lequel le rabat de recouvrement engage une extrémité libre (171) du premier rabat d'engagement à une extrémité libre (151) de celui-ci, fermant la partie de réception,
dans lequel le rabat de recouvrement peut être pivoté à partir du premier rabat d'engagement en pressant les premier et deuxième panneaux latéraux en direction de la partie de réception, ouvrant la partie de réception,
**caractérisé en ce que** le rabat de recouvrement comprend, à l'extrémité libre de celui-ci, au moins une patte d'engagement (152) qui engage l'extrémité libre du premier rabat d'engagement,
dans lequel la patte d'engagement s'intercale entre le premier rabat d'engagement et le deuxième panneau dans une position fermée dans laquelle le rabat de recouvrement ferme la partie de réception, et
**en ce que** le premier rabat d'engagement comporte une encoche d'engagement (172) à l'extrémité libre de celui-ci, et une extrémité fixe (153) de la patte d'engagement est agencée dans l'encoche d'engagement.

2. Emballage de balai d'essuie-glace selon la revendication 1, dans lequel l'extrémité libre du rabat de recouvrement est située plus vers l'extérieur que l'extrémité libre du premier rabat d'engagement dans la position fermée dans laquelle le rabat de recouvrement ferme la partie de réception.

3. Emballage de balai d'essuie-glace selon la revendication 1, dans lequel le rabat de recouvrement comprend une paire de moitiés (150a, 150b) divisées par la première ligne de pliage, et
dans lequel les moitiés de la paire de moitiés sont pliées autour de la première ligne de pliage dans la position fermée dans laquelle le rabat de recouvrement ferme la partie de réception.

4. Emballage de balai d'essuie-glace selon la revendication 1, dans lequel le premier panneau comprend un rabat inférieur (160) à une extrémité longitudinalement opposée, le rabat inférieur étant pliable autour de la première ligne de pliage et pouvant pivoter autour d'un deuxième axe d'articulation (123) qui coupe la première ligne de pliage en formant un angle aigu dans une direction intérieure,
dans lequel le deuxième panneau comprend un deuxième rabat d'engagement (180) qui est plié en direction du premier panneau à une extrémité longitudinalement opposée, et
dans lequel le rabat inférieur comprend au moins une patte d'engagement (162) à une extrémité libre (161) de celui-ci, la patte d'engagement du rabat inférieur étant insérée entre le deuxième rabat d'engagement et le deuxième panneau.

5. Emballage de balai d'essuie-glace selon la revendication 4, dans lequel le deuxième rabat d'engagement comporte une encoche d'engagement (182) à une extrémité libre (181) de celui-ci, et une extrémité fixe (163) de la patte d'engagement du rabat inférieur est agencée dans l'encoche d'engagement (182).

6. Emballage de balai d'essuie-glace selon la revendication 4, dans lequel, lorsque le rabat inférieur est engagé avec le deuxième rabat d'engagement, l'extrémité libre (161) du rabat inférieur est située plus vers l'extérieur que l'extrémité libre du deuxième rabat d'engagement.

7. Emballage de balai d'essuie-glace selon la revendication 4, dans lequel le rabat inférieur comprend une paire de moitiés (160a, 160b) divisées par la première ligne de pliage, et
dans lequel, lorsque le rabat inférieur est engagé avec le deuxième rabat d'engagement, les moitiés de la paire de moitiés du rabat inférieur sont pliées autour de la première ligne de pliage.

8. Emballage de balai d'essuie-glace selon la revendication 1, dans lequel le deuxième panneau est pliable autour d'une deuxième ligne de pliage (131) qui s'étend dans une direction longitudinale entre les deux bords latéraux (116, 117).

9. Emballage de balai d'essuie-glace selon la revendication 1, dans lequel le rabat de recouvrement se présente sous une forme pentagonale ou hexagonale.

10. Emballage de balai d'essuie-glace selon la revendication 1, comprenant en outre des trous de suspension (134, 173) perforés à travers le deuxième panneau et le premier rabat d'engagement.
